# EUROPÄISCHE PATENTSCHRIFT

(11) **EP 3 591 478 B1**
(45) Veröffentlichungstag und Bekanntmachung des Hinweises auf die Patenterteilung: **12.08.2020**
(21) Anmeldenummer: 19171510.1
(22) Anmeldetag: 29.04.2019
(51) Int. Cl.: G05B 9/03, G05B 9/02, F16P 3/08

(54) **SICHERHEITSSCHALTERANORDNUNG**
SAFETY SWITCH ASSEMBLY
ENSEMBLE COMMUTATEUR DE SÉCURITÉ

(30) Priorität: 06.07.2018 DE 102018116396
(43) Veröffentlichungstag der Anmeldung: 08.01.2020
(73) Patentinhaber: EUCHNER GmbH + Co. KG, 70771 Leinfelden-Echterdingen (DE)
(72) Erfinder: Rothenburg, Jens, 72622 Nürtingen (DE)
(74) Vertreter: Ruckh, Rainer Gerhard

(56) Entgegenhaltungen:
- DE-A1-102008 060 004
- DE-A1-102011 016 137
- DE-A1-102014 117 280

## Beschreibung

Die Erfindung betrifft eine Sicherheitsschalteranordnung.

Eine derartige Sicherheitsschalteranordnung umfasst generell wenigstens einen Sicherheitsschalter.

Sicherheitsschalter werden im Bereich der Sicherheitstechnik eingesetzt, wobei diese insbesondere zur Gefahrenbereichsabsicherung an Anlagen eingesetzt werden. Der Begriff Anlagen umfasst insbesondere auch Maschinen, Arbeitsgeräte und dergleichen.

Beispielsweise können derartige Sicherheitsschalter mit Transpondern arbeiten, wobei anhand der Transpondersignale erkannt werden kann, ob eine trennende Schutzeinrichtung wie zum Beispiel eine Tür als Zugang zu einer Anlage geschlossen ist oder nicht.

Ein derartiger Sicherheitsschalter weist generell eine Ein-/Ausgangsstruktur mit Eingängen und Ausgängen auf, die insbesondere redundant ausgebildet sein kann. Der Sicherheitsschalter generiert entsprechend seiner Überwachungsfunktion, insbesondere in Abhängigkeit des Transpondersignals, ein Schaltsignal, das an eine Steuerung ausgegeben wird, mit dem die zu überwachende Anlage gesteuert wird. Wird mit dem Sicherheitsschalter ein gefahrloser Zustand detektiert, insbesondere, dass eine zu überwachende Tür geschlossen ist und so den Zugang zu einem Gefahrenbereich versperrt, in dem zum Beispiel die Anlage angeordnet ist, wird ein Schaltsignal mit dem Schaltzustand "eingeschalteter Zustand", entsprechend einer aktiven Sicherheitsbedingung, das heißt einem Freigabesignal, generiert. Empfängt die Steuerung vom Sicherheitsschalter dieses Freigabesignal, kann die Steuerung die Anlage in Betrieb nehmen beziehungsweise in Betrieb lassen. Wird mit dem Sicherheitsschalter jedoch eine offene Tür registriert, generiert dieser ein Schaltsignal mit dem Schaltzustand "ausgeschalteter Zustand", entsprechend einer nicht aktiven Sicherheitsbedingung. In diesem Fall schaltet der Sicherheitsschalter zur Vermeidung gefahrbringender Zustände die Anlage aus.

Abhängig vom geforderten Sicherheitsniveau bzw. vom Gefährdungsgrad einer zu sichernden Anlage kann es sein, dass dem Sicherheitsschalter ein Aktor zugeordnet ist, der eine weitere Sicherheitsfunktion ausführt.

Ein derartiger Aktor kann beispielsweise als Zuhalteelement ausgebildet sein, das eine Zuhaltung bewirkt. Eine solche Zuhaltung kann beispielsweise derart ausgebildet sein, dass sie eine Verriegelung einer trennenden Schutzeinrichtung wie zum Beispiel einer Tür als Zugang zu einer Anlage in der Form bewirkt, dass die Tür nicht mehr geöffnet werden kann.

Eine Freigabe der Anlage erfolgt in diesem Fall nur dann, wenn der Sicherheitsschalter den gefahrlosen Zustand detektiert und auch die Zuhaltung bewirkt ist. Zur Erfüllung der Sicherheitsanforderungen muss der Aktor, das heißt das Zuhalteelement, fehlersicher angesteuert werden.

DE102008060004 A1 betrifft einen Sicherheitsschalter zum Erzeugen eines Anlagenfreigabesignals in Abhängigkeit von der Position einer beweglichen Schutztür, mit der ein Gefahrenbereich einer Anlage zugangsgesichert wird, wobei bei Vorliegen des Anlagenfreigabesignals zumindest ein in dem Gefahrenbereich liegender Teil der Anlage betrieben werden kann.

Der Erfindung liegt die Aufgabe zugrunde eine Sicherheitsschalteranordnung bereitzustellen, bei welcher mit geringem Aufwand eine sichere Ansteuerung eines Aktors, der einem Sicherheitsschalter zugeordnet ist, ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitsschalteranordnung mit wenigstens einem Sicherheitsschalter und einem dem Sicherheitsschalter zugeordneten Aktor. Der Aktor wird zweikanalig mit einem binären Ansteuersignal angesteuert. Der Sicherheitsschalter weist zur zweikanaligen Ansteuerung des zugeordneten Aktors einen ersten Anschluss auf, über welchen nur das binäre Ansteuersignal an den Aktor übertragen wird. Weiterhin weist der Sicherheitsschalter einen zweiten Anschluss auf, über welchen Kommunikationssignale von der oder an die Steuer- und Auswerteeinheit und das binäre Anschlussmodul übertragen werden.

Mit der erfindungsgemäßen Sicherheitsschalteranordnung wird eine zweikanalige und damit fehlersichere Ansteuerung eines Aktors über die Steuer- und Auswerteeinheit erzielt. Durch diese fehlersichere Aktor-Ansteuerung werden die Anforderungen für den Einsatz der Sicherheitsschalteranordnung im Bereich der Sicherheitstechnik erfüllt, das heißt mit dem Aktor können sicherheitsrelevante Prozesse freigegeben werden.

Ein wesentlicher Vorteil der Erfindung besteht darin, dass für eine zweikanalige Ansteuerung des Aktors am Sicherheitsschalter ein erster Anschluss vorgesehen ist, über welchen nur das binäre Ansteuersignal zur Ansteuerung des Aktors vorgesehen ist, wodurch ein erster Kanal zur Ansteuerung des Aktors gebildet wird. Weiterhin weist der Sicherheitsschalter für die zweikanalige Ansteuerung des Aktors einen zweiten Anschluss auf, über welchen neben anderen Kommunikationsdaten auch das binäre Ansteuersignal übertragen wird, wodurch ein zweiter Kanal für die Ansteuerung des Aktors gebildet wird.

Gemäß einer schaltungstechnisch vorteilhaften Ausgestaltung ist dabei der erste Anschluss, über welchen nur das zweite binäre Ansteuersignal übertragen wird, ein Eingang des Sicherheitsschalters. Der zweite Anschluss, über welchen das binäre Ansteuersignal und die Kommunikationssignale übertragen werden, ist ein bidirektionaler Anschluss.

Erfindungsgemäß werden über den zweiten Kanal nicht nur das binäre Ansteuersignal sondern auch die Kommunikationssignale übertragen, die beispielsweise Diagnosedaten des Sicherheitsschalters umfassen können. Durch die simultane Übertragung des binären Ansteuersignals und der Kommunikationssignale weist der zweite Anschluss eine Doppelfunktion auf und damit eine erhöhte Funktionalität. Besonders vorteilhaft ist, dass durch diese simultane Übertragung von Kommunikationssignalen und dem binären Ansteuersignal ein weiterer Anschluss am Sicherheitsschalter eingespart werden kann. Dies führt zu einer schaltungstechnischen Vereinfachung des Sicherheitsschalters.

Durch die zweikanalige Ansteuerung des Aktors über den Sicherheitsschalter können generell bei dem Sicherheitsschalter bereits vorhandene Anschlüsse für Schaltungsstrukturen genutzt werden um den Aktor fehlersicher anzusteuern. Weiterhin kann auch die Anbindung des Sicherheitsschalters an eine übergeordnete Einheit, wie eine Steuerung für eine Anlage, für die Ansteuerung des Aktors mitgenutzt werden. Insbesondere ist es so nahezu ohne zusätzlichen Schaltungsaufwand möglich, die Anlage abhängig von Signalen des Sicherheitsschalters und des Aktors zu steuern.

Damit der Aktor betätigt wird, das heißt eine sicherheitsrelevante Funktion ausführt, ist es notwendig, dass an beiden Kanälen der Ansteuerung zeitgleich derselbe Schaltzustand des binäre Ansteuersignals anliegt.

Die vom Aktor ausgeführte sicherheitsrelevante Funktion kann generell unabhängig von der Funktion des Sicherheitsschalters sein. Ein Beispiel hierfür ist ein Aktor in Form einer motorisch betätigten Bremse an einem sicherheitsrelevanten Gerät.

Besonders vorteilhaft sind die sicherheitsrelevanten Funktionen des Sicherheitsschalters und des Aktors miteinander verknüpft um gemeinsam einen sicherheitstechnischen Prozess zu überwachen beziehungsweise zu steuern.

Dies ist insbesondere dann der Fall, wenn der Aktor ein Zuhalteelement ist.

Ein typischer Anwendungsfall einer derartig ausgebildeten Sicherheitsschalteranordnung mit einem Sicherheitsschalter und einem Zuhalteelement ist die Überwachung einer trennenden Schutzeinrichtung wie einer Tür als Zugang zu einem Gefahrenbereich einer Anlage. Eine die Anlage steuernde Steuerung gibt den Betrieb der Anlage nur frei, wenn mit dem Sicherheitsschalter festgestellt wird, dass eine Tür in ihrer Schließstellung ist und zudem die Tür in dieser Schließstellung mit dem Zuhalteelement zugehalten ist.

Gemäß einer ersten Variante ist der Aktor Bestandteil des Sicherheitsschalters. Der Aktor ist dabei mit dem über die Anschlüsse zweikanalig eingelesenen binären Ansteuersignal angesteuert.

Beispielsweise kann ein Aktor in Form eines Zuhalteelements im Sicherheitsschalter selbst integriert sein. Das Zuhalteelement kann dabei von einem Zuhaltebolzen oder dergleichen gebildet sein.

Gemäß einer zweiten Variante bilden der Aktor und der Sicherheitsschalter separate Einheiten. Das über die Anschlüsse in den Sicherheitsschalter zweikanalig eingegebene binäre Ansteuersignal wird über zwei Signalausgänge des Sicherheitsschalters an den Aktor ausgegeben.

In diesem Fall bildet der Aktor eine separate Einheit, wobei auch dann der Aktor als Zuhalteelement ausgebildet sein kann. In diesem Fall liest der Sicherheitsschalter das binäre Ansteuersignal zweikanalig ein und gibt es dann über zwei Ausgänge wieder zweikanalig aus, um damit den externen Aktor zu steuern.

Gemäß einer vorteilhaften Ausführungsform ist bei der erfindungsgemäßen Sicherheitsschalteranordnung zur Steuerung der Kommunikation über die Kommunikationssignale eine Steuer- und Auswerteeinheit vorgesehen.

Die Steuer- und Auswerteeinheit erhält die Bussignale beispielsweise von einer übergeordneten Steuerung, zum Beispiel der Steuerung einer Anlage, die auch vom Sicherheitsschalter überwacht wird. Die Steuer- und Auswerteeinheit ist damit Teilnehmer eines Bussystems, das beispielsweise als Profinet oder IO-Link ausgebildet sein kann. Die Steuer- und Auswerteeinheit bildet dabei auch einen Kommunikationsmaster für die Kommunikation mit dem oder den Sicherheitsschaltern. Hierzu erfolgt in der Steuer- und Auswerteeinheit eine Umsetzung von Bussignalen im Kommunikationssignal für den oder die Sicherheitsschalter. Hierzu erfolgt in der Steuer- und Auswerteeinheit eine Umsetzung von Bussignalen in für den Sicherheitsschalter verständliche Kommunikationssignale und das zusätzliche binäre Ansteuersignal für den oder die Sicherheitsschalter.

Gemäß einer ersten Variante weist die Steuer- und Auswerteeinheit einen Busanschluss auf, über welchen das Ansteuersignal für den Aktor über das Bussignal eingelesen werden. Diese werden in der Steuer- und Auswerteeinheit als Ausgangssignale für den Sicherheitsschalter wie beschrieben umgesetzt.

Die in die Steuer- und Auswerteeinheit eingelesenen Bussignale enthalten in diesem Fall neben weiteren Informationen und Daten auch das binäre Ansteuersignal für den Aktor. Um eine fehlersichere Zuführung des binären Ansteuersignals zum Sicherheitsschalter zu gewährleisten, ist der Busanschluss sicher ausgeführt, beispielsweise als PROFIsafe oder IO-Link Safety.

Gemäß einer zweiten Variante weist die Steuer- und Auswerteeinheit einen Busanschluss auf, über welchen Bussignale eingelesen werden. Die Steuer- und Auswerteeinheit weist weiterhin eine redundante Eingangsstruktur zum Einlesen des binären Ansteuersignals auf. In der Steuer- und Auswerteeinheit werden dabei die Kommunikationssignale und das Bussignal als Ausgangssignale für den Sicherheitsschalter umgesetzt.

Da in diesem Fall die Übertragung des binären Ansteuersignals nicht über das Bussystem sondern über einen separaten fehlersicheren Kanal erfolgt, kann über den Busanschluss eine nicht sichere Übertragung von Bussignalen erfolgen.

Gemäß einer besonders vorteilhaften Ausgestaltung der Erfindung umfasst diese eine Reihenschaltung mit mehreren Sicherheitsschaltern.

Dabei weist vorteilhaft jeder Sicherheitsschalter zwei Eingänge und zwei Ausgänge auf. Über die Ausgänge ist ein im Sicherheitsschalter generiertes sicherheitsgerichtetes Ausgangssignal ausgebbar. Zur Ausbildung der Reihenschaltung sind die Ausgänge eines Sicherheitsschalters mit den Eingängen des nachfolgenden Sicherheitsschalters verbunden.

Mit einer solchen Reihenschaltung von Sicherheitsschaltern können auch komplexe Überwachungsfunktionen realisiert werden. Ein Beispiel hierfür ist ein Gefahrenbereich einer Anlage, die mehrere Zugänge mit einer trennenden Schutzeinrichtung wie einer Tür aufweist. Dann wird jede trennende Schutzeinrichtung eines Zugangs mit einem Sicherheitsschalter überwacht. In der Reihenschaltung erfolgt dann eine Verknüpfung der von den Sicherheitsschaltern generierten sicheren Schaltsignale derart, dass eine Freigabe der Anlage durch die angeordnete Steuerung nur dann erfolgt, wenn alle Sicherheitsschalter einen geschlossenen Zustand, das heißt eine trennende Schutzeinrichtung beziehungsweise Tür in ihrer Schließstellung detektieren.

Dabei kann einem, mehreren oder allen Sicherheitsschaltern jeweils ein Aktor, insbesondere ein Zuhalteelement zugeordnet sein.

Ein Sicherheitsschalter, dem ein solches Zuhalteelement zugeordnet ist, generiert nur dann ein einem Freigabesignal entsprechendes Schaltsignal, wenn der Sicherheitsschalter die trennende Schutzeinrichtung beziehungsweise Tür in der Schließstellung detektiert und wenn die trennende Schutzeinrichtung beziehungsweise Tür mit dem Zuhalteelement zugehalten ist.

Gemäß einer vorteilhaften Ausführungsform sind die Anschlüsse zur Auswertung des Aktors Bestandteil eines Anschlussmittels der oder einer Sicherheitsschalteranordnung .

Die Anzahl der Anschlüsse derartiger Anschlussmittel, die insbesondere in Form von Strukturen ausgebildet sind, ist begrenzt. Dies gilt insbesondere für die im Bereich der Sicherheitstechnik häufig eingesetzten achtpoligen Anschlussmitteln, die als M12-Stecker ausgebildet sind.

Bei der erfindungsgemäßen Sicherheitsschalteranordnung kann trotz der begrenzten Anzahl von Anschlüssen des Anschlussmittels sowohl ein Kommunikationssignal zwischen mehreren Kommunikationsteilnehmern, insbesondere mehreren Sicherheitsschaltern, als auch eine fehlersichere zweikanalige Ansteuerung eines dem Sicherheitsschalter zugeordneten Aktors realisiert werden. Da für eine zweikanalige Ansteuerung des Aktors als ein Kanal die Übertragung der Kommunikationssignale mitgenutzt wird, kann auf einen der beiden normalerweise benötigten Anschlusspins verzichtet werden.

Insbesondere können für die Sicherheitsschalter der erfindungsgemäßen Sicherheitsschalteranordnung achtpolige M12-Stecker als Standardprodukte eingesetzt werden. Sicherheitsschalter weisen üblicherweise jeweils zwei Anschlüsse für Eingänge, für Ausgänge und für die Spannungsversorgung auf, so dass nur noch zwei freibleibende Anschlüsse übrig sind. Wenn ein Anschluss für eine Übertragung von Kommunikationssignalen separiert werden müsste, wäre kein zweikanaliger Anschluss eines Aktors mehr möglich. Durch die erfindungsgemäße Ausbildung der Anschlüsse derart, dass über einen Anschluss nur das binäre Ansteuersignal für den Aktor, jedoch über einen weiteren Anschluss sowohl das binäre Ansteuersignal als auch Kommunikationssignale übertragen werden können, gelingt es auf überraschend einfache Weise unter Nutzung eines achtpoligen M12-Steckers sowohl eine Übertragung von Kommunikationssignalen als auch eine zweikanalige Aktor-Ansteuerung zu realisieren.

Die Erfindung wird im Folgenden anhand der Zeichnungen erläutert. Es zeigen:
- Figur 1:: Erstes Ausführungsbeispiel der erfindungsgemäßen Sicherheitsschalteranordnung.
- Figur 2:: Zweites Ausführungsbeispiel der erfindungsgemäßen Sicherheitsschalteranordnung.

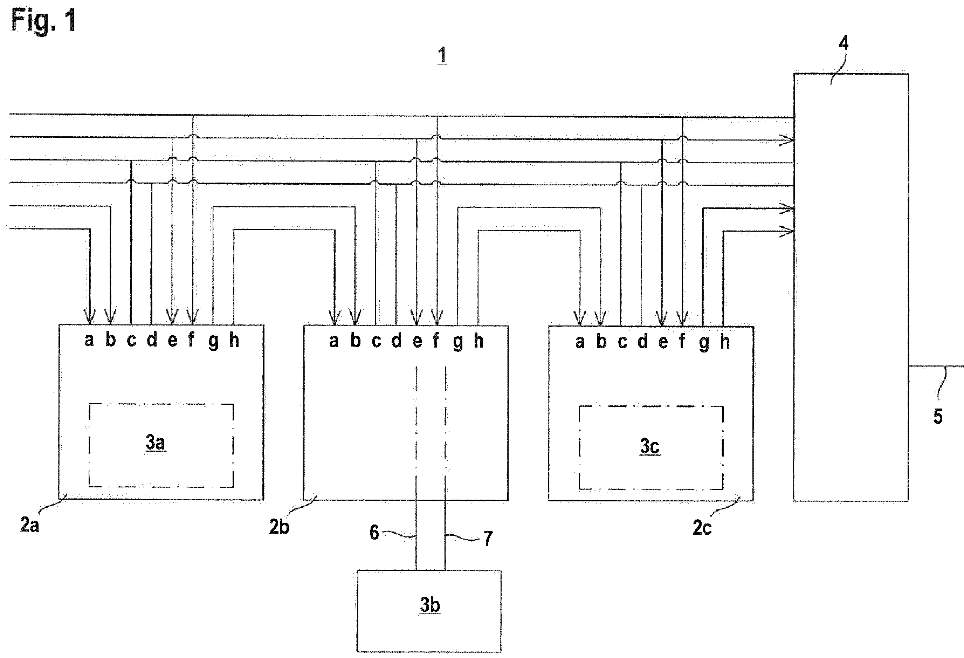

Figur 1 zeigt ein erstes Ausführungsbeispiel der erfindungsgemäßen Sicherheitsschalteranordnung 1 mit einer Reihenschaltung bestehend aus einer Mehrfachanordnung von Sicherheitsschaltern 2a - 2c.

Figur 1 zeigt dabei eine Reihenschaltung von drei identisch ausgebildeten Sicherheitsschaltern 2a - 2c. Die Sicherheitsschalter 2a - 2c müssen jedoch nicht zwingend identisch sein. Generell kann die Reihenschaltung auch eine andere Anzahl von Sicherheitsschaltern 2a - 2c aufweisen. Schließlich kann auch ein einzelner Sicherheitsschalter 2a - 2c eingesetzt werden.

Die Sicherheitsschalter 2a - 2c werden im Bereich der Sicherheitstechnik eingesetzt. Insbesondere wird mit einem Sicherheitsschalter 2a - 2c überwacht, ob eine trennende Schutzeinrichtung, wie zum Beispiel eine Tür, den Zugang zu einem Gefahrenbereich, in welchem eine gefahrbringende Anlage angeordnet ist, geschlossen ist. Die Schließstellung der Tür kann dabei anhand von Transpondersignalen kontrolliert werden. Dabei kann ein Transponder in einem Betätiger angeordnet sein, der an der Tür angeordnet ist und mit dieser beweglich angeordnet ist. Der Sicherheitsschalter 2a - 2c ist dann an einem den Zugang begrenzenden Rahmen angeordnet. Wenn sich die Tür in der Schließstellung befindet, ist der Transponder im Lesebereich eines im Sicherheitsschalter 2a - 2c angeordneten RFID-Lesegeräts, so dass dieses die Transpondersignale des Transponders empfangen kann.

Bei der Sicherheitsschalteranordnung 1 gemäß Figur 1 ist jedem Sicherheitsschalter 2a - 2c ein Aktor in Form eines Zuhalteelements 3a - 3c zugeordnet. Generell kann auch nur einem Teil der Sicherheitsschalter 2a - 2c ein Aktor zugeordnet sein, wobei die Ausbildung des Aktors als Zuhalteelement nicht zwingend ist.

Mit dem Zuhalteelement 3a - 3c wird eine Zuhaltung der trennenden Schutzeinrichtung, die vom zugeordneten Sicherheitsschalter 2a - 2c überwacht wird, bewirkt, wenn sich diese in der Schließstellung befindet. Das Zuhalteelement 3a - 3c kann beispielsweise in Form eines Zuhaltebolzens ausgebildet sein.

Wie aus Figur 1 ersichtlich, weist jeder Sicherheitsschalter 2a - 2c acht Anschlüsse a - h auf, die in einem achtpoligen Anschlussmittel, insbesondere einem M12-Stecker zusammengefasst sind.

Die Anschlüsse a, b sind jeweils von einem sicheren Eingang gebildet, welche zusammen eine redundante Eingangsstruktur bilden. Die Anschlüsse g, h sind jeweils von einem sicheren Ausgang gebildet, welche zusammen eine redundante Ausgangsstruktur bilden. Die Anschlüsse c, d dienen zur Spannungsversorgung des jeweiligen Sicherheitsschalters 2a - 2c, wobei der Anschluss c zum Anschluss einer 24V-Spannungsversorgung dient und der Anschluss d zum Anschluss eines Bezugspotentials GND dient.

Zur Ausbildung der Reihenschaltung sind jeweils die Ausgänge eines Sicherheitsschalters 2a - 2c mit den Ausgängen des nachfolgenden Sicherheitsschalters 2a - 2c über eine Leitung verbunden. Die Ausgänge des letzten Sicherheitsschalters 2a - 2c sind über Leitungen zu einer Steuer- und Auswerteeinheit 4 geführt, von welcher die über die Ausgänge übertragenen Signale einer nicht dargestellten Steuerung zugeführt sind, die eine mit der Sicherheitsschalteranordnung 1 überwachte Anlage steuert.

In jedem Sicherheitsschalter 2a - 2c wird ein binäres Schaltsignal generiert, dessen Schaltzustände abhängig davon sind, ob der Sicherheitsschalter 2a - 2c die trennende Schutzeinrichtung in der Schließstellung detektiert oder nicht und ob mit den jeweils zugeordneten Zuhalteelementen 3a - 3c eine Zuhaltung der trennenden Schutzeinrichtung bewirkt ist oder nicht. Nur wenn der Sicherheitsschalter 2a - 2c die trennende Schutzeinrichtung in der Schließstellung detektiert und mit dem Zuhalteelement 3a - 3c die Zuhaltung der trennenden Schutzeinrichtung bewirkt ist, generiert der Sicherheitsschalter 2a - 2c ein Schaltsignal mit einem einen Freigabesignal entsprechenden Schaltzustand. Jeder Sicherheitsschalter 2a - 2c gibt das Schaltsignal an den nächsten Sicherheitsschalter 2a - 2c, der auf dieselbe Weise das Schaltsignal generiert und dieses mit dem Schaltsignal des vorigen Sicherheitsschalters 2a - 2c verknüpft.

Auf diese Weise wird mit der gesamten Sicherheitsschalteranordnung 1 als Ausgangssignal für die Steuerung ein Schaltsignal generiert, welches nur dann einem Freigabesignal für die Anlage entspricht, wenn alle Sicherheitsschalter 2a - 2c die jeweilige trennende Schutzeinrichtung in ihrer Schließstellung detektieren und die trennende Schutzeinrichtung mit dem zugeordneten Zuhalteelement 3a - 3c zugehalten ist.

Die Steuer- und Auswerteeinheit 4 kommuniziert über ein Busssystem mit der Steuerung und weist hierzu einen Busanschluss 5 auf. Die Steuer- und Auswerteeinheit 4 bildet zudem einen Kommunikationsmaster zur Kommunikation mit den Sicherheitsschaltern 2a - 2c der Sicherheitsschalteranordnung 1. Hierzu setzt die Steuer- und Auswerteeinheit 4 über den Busanschluss 5 empfangene Bussignale in Signale für die Sicherheitsschalter 2a - 2c der Sicherheitsschalteranordnung 1 um, die über den Eingang c sowie den Kommunikationsanschluss e an den Sicherheitsschalter bzw. den Aktor gesendet wird.

Für eine solche Kommunikation ist insbesondere der als bidirektionaler Anschluss ausgebildete Anschluss e eines Sicherheitsschalters 2a - 2c vorgesehen, der jeweils über eine Kommunikationsleitung an die Steuer- und Auswerteeinheit 4 angeschlossen ist. Über die Kommunikationsleitung werden Kommunikationssignale zwischen dem jeweiligen Sicherheitsschalter 2a - 2c und der Steuer- und Auswerteeinheit 4 ausgetauscht. Generell kann auch eine unidirektionale Kommunikation zum jeweiligen Sicherheitsschalter erfolgen.

Erfindungsgemäß wird dieser bidirektionale Anschluss zur Übertragung eines binären Ansteuersignals zur Ansteuerung des Aktors, das heißt im vorliegenden Fall des Zuhalteelements 3a - 3c mitgenutzt. Um den Aktor zweikanalig auszusteuern ist weiterhin der Anschluss f vorgesehen, über welchen nur das binäre Ansteuersignal übertragen wird und welcher als Eingang des Sicherheitsschalters 2a - 2c ausgebildet ist. Eine Aktivierung des Aktors erfolgt somit nur dann wenn auf beiden Anschlüssen e, f derselbe Schaltzustand des binären Ansteuersignals, welcher einer Aktivierung des Aktors entspricht, ansteht.

Bei dieser Ausführungsform werden neben weiteren Informationen und Daten über den Busanschluss 5 insbesondere auch die binären Ansteuersignale für die Aktoren an die Steuer- und Auswerteeinheit 4 übertragen, wobei dann die Steuer- und Auswerteeinheit 4 die binären Ansteuersignale an die jeweiligen Sicherheitsschalter 2a - 2c übertragen werden. Da mit den binären Ansteuersignalen für die Aktoren sicherheitsrelevante Daten über das Bussystem übertragen werden, muss die Datenübertragung über das Bussystem sicher, das heißt fehlersicher sein. Dabei bedeutet fehlersicher, dass Mittel zur Erkennung von Fehlern in der Übertragung und Speicherung von Daten vorgesehen sind.

Wie in Figur 1 schematisch dargestellt, sind die Zuhalteelemente 3a, 3c im jeweiligen Sicherheitsschalter 2a, 2b integriert, wobei das Zuhalteelement 3b eine separate Einheit zusätzlich zum Sicherheitsschalter 2b bildet.

Dementsprechend unterscheidet sich die Ansteuerung der Zuhalteelemente 3a, 3c einerseits und das Zuhalteelement 3b andererseits.

Die Zuhalteelemente 3a, 3c können, da sie Bestandteil der Sicherheitsschalter 2a, 2c sind, direkt mit dem über die Anschlüsse e, f zweikanalig eingelesenen binären Ansteuersignal zweikanalig angesteuert werden. Demgegenüber werden bei dem Sicherheitsschalter 2b die Anschlüsse e, f mit zwei Signalausgängen 6, 7 verbunden, an welchen das Zuhalteelement 3b angeschlossen ist. In diesem Fall wird das über die Anschlüsse e, f zweikanalig in den Sicherheitsschalter 2b eingelesene binäre Ansteuersignal über die Signalausgänge 6, 7 zur zweikanaligen Ansteuerung des Zuhalteelements 3b ausgegeben.

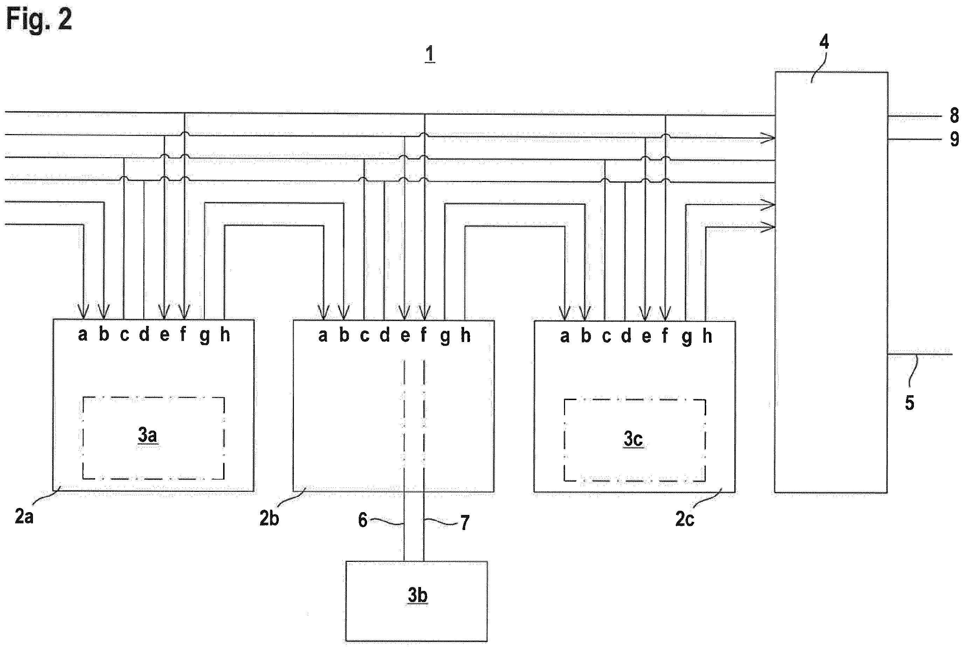

Figur 2 zeigt ein zweites Ausführungsbeispiel der erfindungsgemäßen Sicherheitsschalteranordnung 1. Diese unterscheidet sich von der Ausführungsform gemäß Figur 1 nur dadurch, dass die Steuer- und Auswerteeinheit 4 neben dem Busanschluss 5 eine redundante Eingangsstruktur mit zwei Signaleingängen 8, 9 aufweist. Über diese werden die binären Ansteuersignale für die Aktoren fehlersicher eingelesen. Damit braucht die Kommunikation über das Bussystem nicht mehr fehlersicher sein.

### Bezugszeichenliste

- (1): Sicherheitsschalteranordnung
- (2a): Sicherheitsschalter
- (2b): Sicherheitsschalter
- (2c): Sicherheitsschalter
- (3a): Zuhalteelement
- (3b): Zuhalteelement
- (3c): Zuhalteelement
- (4): Steuer- und Auswerteeinheit
- (5): Busanschluss
- (6): Signalausgang
- (7): Signalausgang
- (8): Signaleingang
- (9): Signaleingang
- (a): Anschluss
- (b): Anschluss
- (c): Anschluss
- (d): Anschluss
- (e): Anschluss
- (f): Anschluss
- (g): Anschluss
- (h): Anschluss

## Patentansprüche

1. Sicherheitsschalteranordnung (1) mit wenigstens einem Sicherheitsschalter (2a - 2c) einer Steuer- und Auswerteeinheit (4) und einem dem Sicherheitsschalter (2a - 2c) zugeordneten Aktor, wobei der Aktor zweikanalig mit einem binären Ansteuersignal angesteuert ist, **dadurch gekennzeichnet, dass** der Sicherheitsschalter (2a - 2c) zur zweikanaligen Ansteuerung des Aktors einen ersten Anschluss (f) aufweist, über welchen nur das binäre Ansteuersignal übertragen wird, und weiterhin einen zweiten Anschluss (e) aufweist, über welchen Kommunikationssignale von der oder an die Steuer- und Auswerteeinheit (4) und das binäre Ansteuersignal übertragen werden.

2. Sicherheitsschalteranordnung (1) nach Anspruch 1, **dadurch gekennzeichnet, dass** der erste Anschluss (f), über welchen nur das binäre Ansteuersignal übertragen wird, ein Eingang des Sicherheitsschalters (2a - 2c) ist, und dass der zweite Anschluss (e), über welchen das binäre Ansteuersignal und die Kommunikationssignale übertragen werden, ein bidirektionaler Anschluss ist.

3. Sicherheitsschalteranordnung (1) nach einem der Ansprüche 1 oder 2, **dadurch gekennzeichnet, dass** der Aktor ein Zuhalteelement (3a - 3c) ist.

4. Sicherheitsschalteranordnung (1) nach einem der Ansprüche 1 - 3, **dadurch gekennzeichnet, dass** der Aktor Bestandteil des Sicherheitsschalters (2a - 2c) ist, wobei der Aktor mit dem über die Anschlüsse (e, f) zweikanalig eingelesenen binären Ansteuersignal angesteuert ist.

5. Sicherheitsschalteranordnung (1) nach einem der Ansprüche 1 - 3, **dadurch gekennzeichnet, dass** der Aktor und der Sicherheitsschalter (2a - 2c) separate Einheiten bilden, wobei das über die Anschlüsse (e, f) in den Sicherheitsschalter (2a - 2c) zweikanalig eingelesene binäre Ansteuersignal über zwei Signalausgänge (6, 7) des Sicherheitsschalters (2a - 2c) an den Aktor ausgegeben wird.

6. Sicherheitsschalteranordnung (1) nach einem der Ansprüche 1 bis 5, **dadurch gekennzeichnet, dass** die Steuer- und Auswerteeinheit (4) einen Busanschluss (5) aufweist, über welchen das binäre Ansteuersignale enthaltende Bussignale eingelesen werden, welche in der Steuer- und Auswerteeinheit (4) als Ausgangssignale für den Sicherheitsschalter (2a - 2c) umgesetzt werden.

7. Sicherheitsschalteranordnung (1) nach Anspruch 6, **dadurch gekennzeichnet, dass** über den Busanschluss (5) eine sichere Übertragung von Bussignalen erfolgt.

8. Sicherheitsschalteranordnung (1) nach Anspruch 7, **dadurch gekennzeichnet, dass** die Steuer- und Auswerteeinheit (4) einen Busanschluss (5) aufweist, über welchen Bussignale eingelesen werden, und dass die Steuer- und Auswerteeinheit (4) weiterhin eine redundante Eingangsstruktur zum Einlesen des binären Ansteuersignals aufweist, wobei in der Steuer- und Auswerteeinheit (4) die redundante Eingangsstruktur in das binäre Ausgangssignal und das Kommunikationssignal mit dem binären Ansteuersignal für den Sicherheitsschalter (2a - 2c) umgesetzt werden.

9. Sicherheitsschalteranordnung (1) nach Anspruch 8, **dadurch gekennzeichnet, dass** über den Busanschluss (5) eine nicht sichere Übertragung von Bussignalen erfolgt.

10. Sicherheitsschalteranordnung (1) nach einem der Ansprüche 1 - 9, **dadurch gekennzeichnet, dass** diese eine Reihenschaltung mit mehreren Sicherheitsschaltern (2a - 2c) umfasst.

11. Sicherheitsschalteranordnung (1) nach Anspruch 10, **dadurch gekennzeichnet, dass** jeder Sicherheitsschalter (2a - 2c) zwei Eingänge und zwei Ausgänge aufweist, wobei über die Ausgänge ein im Sicherheitsschalter (2a - 2c) generiertes sicherheitsgerichtetes Ausgangssignal ausgebbar ist, wobei zur Ausbildung der Reihenschaltung die Ausgänge eines Sicherheitsschalters (2a - 2c) mit den Eingängen des nachfolgenden Sicherheitsschalters (2a - 2c) verbunden sind.

12. Sicherheitsschalteranordnung (1) nach einem der Ansprüche 1 - 11, **dadurch gekennzeichnet, dass** die Anschlüsse (e, f) zur Ansteuerung des Aktors Bestandteil eines Anschlussmittels der oder eines Sicherheitsschalters sind.

13. Sicherheitsschalteranordnung (1) nach Anspruch 12, **dadurch gekennzeichnet, dass** der oder jeder Sicherheitsschalter (2a - 2c) ein achtpoliges Anschlussmittel aufweist.

14. Sicherheitsschalteranordnung (1) nach Anspruch 13, **dadurch gekennzeichnet, dass** das Anschlussmittel von einem M12-Stecker gebildet ist.

## Claims

1. Safety switch arrangement (1) with at least one safety switch (2a - 2c) of a control and evaluating unit (4) and an actuator associated with the safety switch (2a - 2c), wherein the actuator has two-channel activation by a binary activation signal, **characterised in that** the safety switch (2a - 2c) comprises a first terminal (f), by way of which only the binary activation signal is transmitted, for the two-channel activation of the actuator and further comprises a second terminal (e) by way of which communication signals from or to the control and evaluating unit (4) and the binary activation signal are transmitted.

2. Safety switch arrangement (1) according to claim 1, **characterised in that** the first terminal (f) by way which only the binary activation signal is transmitted is an input of the safety switch (2a - 2c) and the second terminal (e) by way of which the binary activation signal and the communication signals are transmitted is a bidirectional terminal.

3. Safety switch arrangement (1) according to one of claims 1 and 2, **characterised in that** the actuator is a retaining element (3a - 3c).

4. Safety switch arrangement (1) according to any one of claims 1 to 3, **characterised in that** the actuator is a component of the safety switch (2a - 2c), wherein the actuator is activated by the binary activation signal read in on two channels by way of the terminals (e, f).

5. Safety switch arrangement (1) according to any one of claims 1 to 3, **characterised in that** the actuator and the safety switch (2a - 2c) form separate units, wherein the binary activation signal read into the safety switch (2a - 2c) on two channels by way of the terminals (e, f) is delivered to the actuator via two signal outputs (6, 7) of the safety switch (2a - 2c).

6. Safety switch arrangement (1) according to any one of claims 1 to 5, **characterised in that** the control and evaluating unit (4) comprises a bus terminal (5) by way of which bus signals containing the binary activation signal are read in, the bus signals being realised in the control and evaluating unit (4) as output signals for the safety switch (2a - 2c).

7. Safety switch arrangement (1) according to claim 6, **characterised in that** a secure transmission of bus signals takes place by way of the bus terminal (5).

8. Safety switch arrangement (1) according to claim 7, **characterised in that** the control and evaluating unit (4) comprises a bus terminal (5) by way of which bus signals are read in and the control and evaluating unit (4) further comprises a redundant input structure for the reading-in of the binary activation signal, wherein in the control and evaluating unit (4) in the redundant input structure the binary output signal and the communication signal are realised with the binary activation signal for the safety switch (2a - 2c).

9. Safety switch arrangement (1) according to claim 8, **characterised in that** a non-secure transmission of bus signals is carried out by way of the bus terminal (5).

10. Safety switch arrangement (1) according to any one of claims 1 to 9, **characterised in that** this comprises a series connection with a plurality of safety switches (2a - 2c).

11. Safety switch arrangement (1) according to claim 10, **characterised in that** each safety switch (2a - 2c) has two inputs and two outputs, wherein a safety-oriented output signal generated in the safety switch (2a - 2c) can be output by way of the outputs, and wherein, for formation of the series connection, the outputs of a safety switch (2a - 2c) are connected with the inputs of the following safety switch (2a - 2c).

12. Safety switch arrangement (1) according to any one of claims 1 to 11, **characterised in that** the terminals (e, f) for activation of the actuator are a component of a connecting means of the or a safety switch.

13. Safety switch arrangement (1) according to claim 12, **characterised in that** the or each safety switch (2a - 2c) comprises an eight-pole connecting means.

14. Safety switch arrangement (1) according to claim 13, **characterised in that** the connecting means is formed by an M12 plug.

## Revendications

1. Agencement d'interrupteurs de sécurité (1) comportant au moins un interrupteur de sécurité (2a - 2c) d'une unité de commande et d'évaluation (4) et un actionneur associé à l'interrupteur de sécurité (2a - 2c), l'actionneur étant commandé sur deux canaux par un signal de commande binaire, **caractérisé en ce que**, pour la commande à deux canaux de l'actionneur, l'interrupteur de sécurité (2a - 2c) présente une première connexion (f) par laquelle seul le signal de commande binaire est transmis, et présente en outre une deuxième connexion (e) par laquelle des signaux de communication depuis ou vers l'unité de commande et d'évaluation (4) et le signal de commande binaire sont transmis.

2. Agencement d'interrupteurs de sécurité (1) selon la revendication 1, **caractérisé en ce que** la première connexion (f), par laquelle seul le signal de commande binaire est transmis, est une entrée de l'interrupteur de sécurité (2a - 2c), et que la deuxième connexion (e), par laquelle le signal de commande binaire et les signaux de communication sont transmis, est une connexion bidirectionnelle.

3. Agencement d'interrupteurs de sécurité (1) selon l'une des revendications 1 ou 2, **caractérisé en ce que** l'actionneur est un élément de verrouillage (3a - 3c).

4. Agencement d'interrupteurs de sécurité (1) selon l'une des revendications 1 à 3, **caractérisé en ce que** l'actionneur est un élément de l'interrupteur de sécurité (2a - 2c), l'actionneur étant commandé par le signal de commande binaire lu sur deux canaux par les connexions (e, f).

5. Agencement d'interrupteurs de sécurité (1) selon l'une des revendications 1 à 3, **caractérisé en ce que** l'actionneur et l'interrupteur de sécurité (2a - 2c) forment des unités séparées, le signal de commande binaire lu dans l'interrupteur de sécurité (2a - 2c) sur deux canaux par les connexions (e, f) étant délivré à l'actionneur par deux sorties de signal (6, 7) de l'interrupteur de sécurité (2a - 2c).

6. Agencement d'interrupteurs de sécurité (1) selon l'une des revendications 1 à 5, **caractérisé en ce que** l'unité de commande et d'évaluation (4) présente une connexion de bus (5) par laquelle des signaux de bus contenant le signal de commande binaire sont lus, lesquels sont convertis dans l'unité de commande et d'évaluation (4) en signaux de sortie pour l'interrupteur de sécurité (2a - 2c).

7. Agencement d'interrupteurs de sécurité (1) selon la revendication 6, **caractérisé en ce qu'**une transmission sécurisée des signaux de bus a lieu par la connexion de bus (5).

8. Agencement d'interrupteurs de sécurité (1) selon la revendication 7, **caractérisé en ce que** l'unité de commande et d'évaluation (4) présente une connexion de bus (5) par laquelle des signaux de bus sont lus, et que l'unité de commande et d'évaluation (4) présente en outre une structure d'entrée redondante pour la lecture du signal de commande binaire, la structure d'entrée redondante étant convertie dans l'unité de commande et d'évaluation (4) en signal de sortie binaire et en signal de communication avec le signal de commande binaire pour l'interrupteur de sécurité (2a - 2c).

9. Agencement d'interrupteurs de sécurité (1) selon la revendication 8, **caractérisé en ce qu'**une transmission non sécurisée des signaux de bus a lieu par la connexion de bus (5).

10. Agencement d'interrupteurs de sécurité (1) selon l'une des revendications 1 à 9, **caractérisé en ce qu'**il comprend un montage en série de plusieurs interrupteurs de sécurité (2a - 2c).

11. Agencement d'interrupteurs de sécurité (1) selon la revendication 10, **caractérisé en ce que** chaque interrupteur de sécurité (2a - 2c) présente deux entrées et deux sorties, un signal de sortie orienté sécurité, généré dans l'interrupteur de sécurité (2a - 2c), pouvant être délivré par les sorties, les sorties d'un interrupteur de sécurité (2a - 2c) étant reliées aux entrées de l'interrupteur de sécurité suivant (2a - 2c) pour former le montage en série.

12. Agencement d'interrupteurs de sécurité (1) selon l'une des revendications 1 à 11, **caractérisé en ce que** les connexions (e, f) pour la commande de l'actionneur sont des éléments d'un moyen de connexion de l'interrupteur de sécurité ou d'un interrupteur de sécurité.

13. Agencement d'interrupteurs de sécurité (1) selon la revendication 12, **caractérisé en ce que** l'interrupteur de sécurité ou chaque interrupteur de sécurité (2a - 2c) présente un moyen de connexion à huit pôles.

14. Agencement d'interrupteurs de sécurité (1) selon la revendication 13, **caractérisé en ce que** le moyen de connexion est formé par un connecteur M12.
